# EUROPÄISCHE PATENTSCHRIFT

(11) **EP 2 397 734 B1**
(45) Veröffentlichungstag und Bekanntmachung des Hinweises auf die Patenterteilung: **10.04.2019**
(21) Anmeldenummer: 11004505.1
(22) Anmeldetag: 01.06.2011
(51) Int. Cl.: F16K 31/04, F16K 31/524

(54) **Stellvorrichtung, insbesondere für ein Heizkörperventil**
Positioning device, in particular for a heater valve
Dispositif de réglage, en particulier pour une soupape de radiateur

(30) Priorität: 18.06.2010 DE 102010024280
(43) Veröffentlichungstag der Anmeldung: 21.12.2011
(73) Patentinhaber: Diehl AKO Stiftung & Co. KG, 88239 Wangen im Allgäu (DE)
(72) Erfinder: Neugebauer, Tobias, 93128 Regenstauf (DE); Kaps, Werner, 88171 Weiler-Simmerberg (DE)
(74) Vertreter: Diehl Patentabteilung

(56) Entgegenhaltungen:
- EP-A2- 0 787 935
- EP-B1- 1 426 667
- DE-A1- 3 642 113
- DE-A1-102006 031 028
- US-A1- 2007 210 659

## Beschreibung

Die vorliegende Erfindung betrifft eine Stellvorrichtung, insbesondere eine Stellvorrichtung für ein Heizkörperventil.

Zum automatischen Regeln der Heizleistung z.B. eines Heizkörpers sind Heizkörperventile bekannt, welche mittels eines elektromotorischen oder thermostatischen Antriebs angesteuert werden. Derartige Heizkörperventile bzw. Stellantriebe können zum Beispiel im Rahmen einer intelligenten Energieverwaltung in privaten Haushalten, Geschäftsräumen und dergleichen eingesetzt werden.

Elektromotorisch betriebene Stellantriebe für Heizkörperventile umfassen üblicherweise einen Antriebsmotor, ein auf das Heizkörperventil wirkendes Stellglied und einen Rotations-Linear-Umsetzungstrieb, welcher die Rotationsbewegung der Motorwelle in eine Linearbewegung des Stellgliedes umsetzt. Der Rotations-Linear-Umsetzungstrieb umfasst seinerseits üblicherweise ein Untersetzungsgetriebe und ein Umsetzelement zum Umsetzen der Rotations- in die Linearbewegung. Darüber hinaus ist es von Vorteil, Stellantriebe mit einer gewissen Selbsthemmung zu verwenden, sodass das Heizkörperventil ohne Aufwendung von Energie in einer gewünschten, aktuell eingestellten Stellung gehalten werden kann.

Die DE 36 42 113 A1 beschreibt eine Stellvorrichtung für ein Heizkörperventil mit einem Rotations-Linear-Umsetzungstrieb, der als Umsetzelement eine Gewindespindel einsetzt. Die Gewindespindel ist dabei selbsthemmend mit einem Flankenwinkel ausgelegt, der kleiner als der wirkende Reibwinkel ist. Ein bekannter Nachteil derartiger selbsthemmender Spindeltriebe ist in dem Wirkungsgrad in Hubrichtung von maximal 50% zu sehen, der in einem erhöhten Energieverbrauch resultiert.

In der EP 1 426 667 B1 wird daher eine Stellvorrichtung für ein Heizkörperventil vorgeschlagen, die gegenüber dem vorbeschriebenen Spindelbetrieb energetisch vorteilhaft ist. Zu diesem Zweck wird ein selbsthemmungsfreier Rotations-Linear-Umsetzungstrieb mit zum Beispiel einer Spiralscheibe, einem Zahnsegmenthebel oder einer Wendel eingesetzt, welcher mit einer zusätzlichen Einrichtung zum periodisch modulierten Erzeugen von Brems- oder Haltemomenten kombiniert ist. Alternativ wird der Antriebsmotor selbst mit einer solchen zusätzlichen Einrichtung zum Erzeugen der Brems- oder Haltemomente ausgestattet. Bei dieser Stellvorrichtung soll ein Gesamtwirkungsgrad von über 80% erzielt werden können, wodurch der Energieverbrauch im Vergleich zur Stellvorrichtung mit selbsthemmendem Spindeltrieb entsprechend reduziert werden kann.

In Dokument EP-A-787 935 ist eine Stellvorrichtung in Form eines Pulsierungs-Schwingungsluftgenerators mit Antriebsmotor, Stellglied und Rotations-Linear-Umsetzungstrieb gezeigt.

Es ist eine Aufgabe der vorliegenden Erfindung, eine verbesserte Stellvorrichtung mit Selbsthemmung und geringem Energieverbrauch zu schaffen.

Diese Aufgabe wird gelöst durch eine Stellvorrichtung mit den Merkmalen des Anspruchs 1. Vorteilhafte Ausgestaltungen und Weiterbildungen der Erfindung sind Gegenstand der abhängigen Ansprüche.

Die insbesondere für ein Heizkörperventil geeignete Stellvorrichtung umfasst einen Antriebsmotor mit einer Motorwelle, ein Stellglied und einen Rotations-Linear-Umsetzungstrieb, der antriebsseitig mit der Motorwelle und abtriebsseitig mit dem Stellglied gekoppelt ist und eine Rotationsbewegung der Motorwelle in eine Linearbewegung des Stellgliedes umsetzt. Gemäß der Erfindung weist der Rotations-Linear-Umsetzungstrieb abtriebsseitig eine Kurvenscheibe auf, die an ihrem Außenumfang mit mehreren Stufenabschnitten versehen ist, die jeweils einen im Wesentlichen konstanten Abstand zur Achse (Achsabstand) der Kurvenscheibe aufweisen und über Verbindungsabschnitte mit einem veränderlichen Achsabstand verbunden sind.

Im Gegensatz zu zum Beispiel einer selbsthemmungsfreien Spiralscheibe mit einem stetig größer werdenden Achsabstand des Außenumfanges besitzt die Kurvenscheibe des Rotations-Linear-Umsetzungstriebes der Stellvorrichtung der Erfindung durch die Stufenabschnitte mit jeweils im Wesentlichen konstanten Achsabstand auf diesen eine Selbsthemmung, da zur Überwindung der Verbindungsabschnitt zumindest in Richtung zur nächsten Stufe mit größerem Achsabstand ein größeres Drehmoment überwunden werden muss. Auf zusätzliche Einrichtungen oder eine sehr große Getriebeuntersetzung zum Erzeugen einer Selbsthemmung in den jeweiligen Einstellpositionen kann verzichtet werden.

Andererseits hat dieser Rotations-Linear-Umsetzungstrieb im Vergleich zum Beispiel zu einer selbsthemmenden Gewindespindel einen relativ hohen Wirkungsgrad, wodurch der Gesamtwirkungsgrad und damit der Energieverbrauch der Stellvorrichtung deutlich reduziert werden können.

Als "Antriebsmotor" kann grundsätzlich ein beliebiger Antriebsmotor eingesetzt werden. Als Antriebsmotoren geeignet sind beispielsweise Gleichstrommotoren, bürstenlose Motoren, Synchronmotoren und Piezomotoren.

Der "Rotations-Linear-Umsetzungstrieb" dient ganz allgemein der Umsetzung der Drehbewegung der Motorwelle des Antriebsmotors in eine Linearbewegung des Stellgliedes. Neben der erfindungsgemäß vorgesehenen speziellen Kurvenscheibe zur eigentlichen Umsetzung der Rotationsbewegung in die Linearbewegung umfasst der Rotations-Linear-Umsetzungstrieb - je nach Art des eingesetzten Antriebsmotors - üblicherweise auch ein Untersetzungsgetriebe, sodass die gewünschten Einstellungen mit einer Drehung von weniger als 360° durch die Kurvenscheibe erzielbar sind. Das Untersetzungsgetriebe kann bei der erfindungsgemäßen Stellvorrichtung optimal auf die auftretenden Drehmomente ausgelegt werden, da es wegen der speziellen Kurvenscheibe selbst keine Selbsthemmung bewirken muss.

Unter dem Begriff "Stellglied" soll ein linear bewegbares Element (z.B. in Form eines Stößels) verstanden werden, welches durch die Kurvenscheibe angetrieben wird und geeignet ist, beispielsweise auf ein Heizkörperventil zu wirken, um die Heizleistung zu steuern.

Die "mehreren Stufenabschnitte" der Kurvenscheibe umfassen - je nach gewünschter Anzahl der möglichen Einstellungen zum Beispiel eines Heizkörperventils - wenigstens zwei Stufenabschnitte. Die häufigsten Anzahlen für die Stufenabschnitte liegen im Bereich von fünf bis zwölf Stufenabschnitten, es sind aber auch beliebige andere Anzahlen möglich.

Die Achsabstände der mehreren Stufenabschnitte nehmen dabei üblicherweise in einer Rotationsrichtung der Kurvenscheibe stetig zu, sodass bei Drehung der Motorwelle und damit der Kurvenscheibe in dieser einen Rotationsrichtung eine Linearbewegung des Stellgliedes in nur einer Richtung (d.h. keine Hin- und Herbewegung) erzeugt wird.

Die "Verbindungsabschnitte" haben vorzugsweise einen sich stetig verändernden (d.h. größer bzw. kleiner werdenden) Achsabstand. Um auch ein gewisses Drehmoment in der anderen Rotationsrichtung zu Stufenabschnitten mit kleiner Achsabständen zu bewirken, kann es von Vorteil sein, den Verbindungsabschnitt mit einem maximalen Achsabstand größer als jenen der beiden angrenzenden Stufenabschnitte auszubilden.

Der "Achsabstand" ist dabei in der Richtung senkrecht zur Achse der Kurvenscheibe als Abstand zwischen der Achse und dem radial äußeren Rand der Kurvenscheibe definiert.

In einer Ausgestaltung der Erfindung gehen die Verbindungsabschnitte der Kurvenscheibe jeweils im Wesentlichen tangential in einen angrenzenden Stufenabschnitt über. Hierdurch können ruckartige Bewegungen des Stellgliedes beim Betätigen der Stellvorrichtung vermieden werden.

In einer weiteren Ausgestaltung der Erfindung sind die Unterschiede zwischen Achsabständen benachbarter Stufenabschnitten der Kurvenscheibe jeweils im Wesentlichen gleich. Auf diese Weise können gleichmäßige Stellvorgänge der Stellvorrichtung erreicht werden. Grundsätzlich sind aber auch Stellvorrichtungen mit variierenden Unterschieden zwischen Achsabständen benachbarter Stufenabschnitte möglich.

In einer weiteren Ausgestaltung der Erfindung sind die Winkelmaße der Stufenabschnitte der Kurvenscheibe im Wesentlichen gleich. Hierdurch können gleichmäßige Stellvorgänge der Stellvorrichtung erreicht werden. Grundsätzlich sind aber auch Stellvorrichtungen mit variierenden Winkelmaßen der Stufenabschnitte möglich.

In einer noch weiteren Ausgestaltung der Erfindung sind die Winkelmaße der Verbindungsabschnitte zwischen den Stufenabschnitten der Kurvenscheibe im Wesentlichen gleich. Auf diese Weise können gleichmäßige Stellvorgänge der Stellvorrichtung erreicht werden. Grundsätzlich sind aber auch Stellvorrichtungen mit variierenden Winkelmaßen der Verbindungsabschnitte möglich.

Vorzugsweise kann das Stellglied über eine Rolle, besonders bevorzugt in Form eines Rillenkugellagers, mit der Kurvenscheibe gekoppelt sein, wobei die Achse der Rolle im Wesentlichen parallel zur Achse der Kurvenscheibe verläuft und an dem Stellglied befestigt ist. Durch diese Maßnahme können die Reibeinflüsse zwischen der rotierenden Kurvenscheibe und dem linear bewegten Stellglied minimiert werden.

Des Weiteren kann das Stellglied zum Beispiel mit Hilfe einer Feder in Richtung weg von der Kurvenscheibe, d.h. in Richtung zum Beispiel zum Heizkörperventil, vorgespannt sein. Auf diese Weise kann der Energieaufwand zum Steuern des gegen das Stellglied vorgespannten Heizkörperventils verringert werden.

In einer weiteren Ausgestaltung der Erfindung weist der Rotations-Linear-Umsetzungstrieb ferner ein Untersetzungsgetriebe auf, das antriebsseitig mit der Motorwelle des Antriebsmotors und abtriebsseitig mit der Kurvenscheibe gekoppelt ist.

In einer noch weiteren Ausgestaltung der Erfindung kann die Stellvorrichtung zudem wenigstens eine Solarzelle zur Energieversorgung des Antriebsmotors, einer Steuerelektronik und/oder eines wiederaufladbaren Energiespeichers aufweisen. Auf diese Weise kann die Einsatzdauer (z.B. bis zum Austausch einer Batterie) der Stellvorrichtung deutlich verlängert werden.

Obige sowie weitere Merkmale, Vorteile und Anwendungsmöglichkeiten der Erfindung werden aus der nachfolgenden Beschreibung eines bevorzugten, nichteinschränkenden Ausführungsbeispiels unter Bezugnahme auf die beiliegenden Zeichnungen besser verständlich. Darin zeigen:
- Fig. 1: eine schematische Schnittansicht einer Stellvorrichtung gemäß einem Ausführungsbeispiel der vorliegenden Erfindung gemäß Schnitt I-I in Fig. 2 und 3;
- Fig. 2: eine schematische Schnittansicht der Stellvorrichtung von Fig. 1 gemäß Schnitt II-II in Fig. 1 und 3;
- Fig. 3: eine schematische Schnittansicht der Stellvorrichtung von Fig. 1 gemäß Schnitt III-III in Fig. 1 und 2;
- Fig. 4: eine schematische Draufsicht einer Kurvenscheibe der Stellvorrichtung von Fig. 1 bis 3;
- Fig. 4A: ein Diagramm zur Erläuterung der Stufen- und Verbindungsabschnitte der Kurvenscheibe von Fig. 4.
- Fig. 5: eine schematische Detailansicht der Einzelheit A von Fig. 1; und
- Fig. 6: eine schematische Detailansicht der Einzelheit B von Fig. 1.

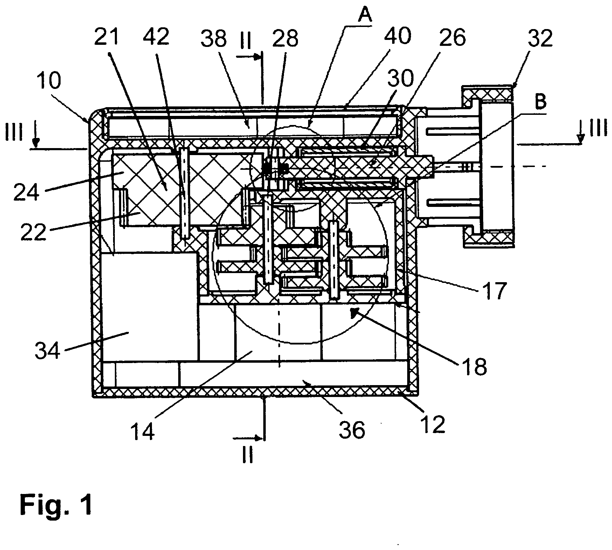

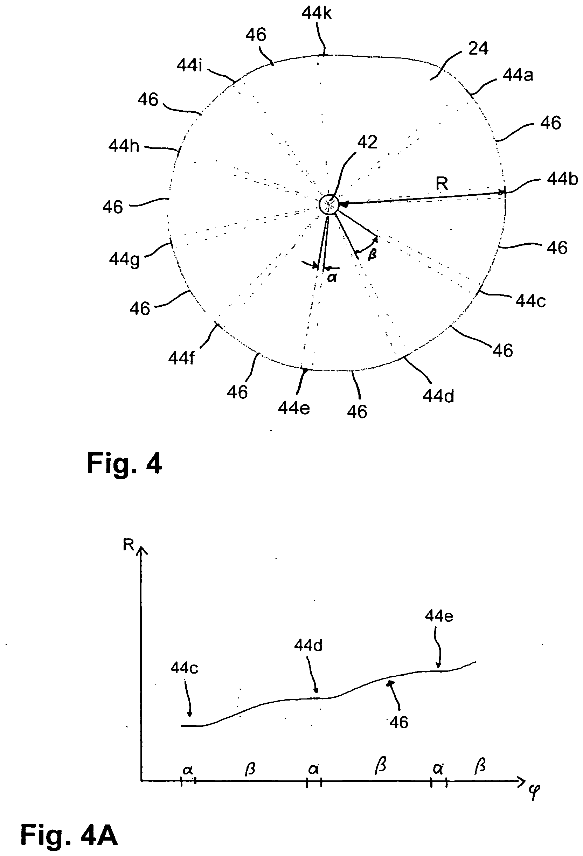

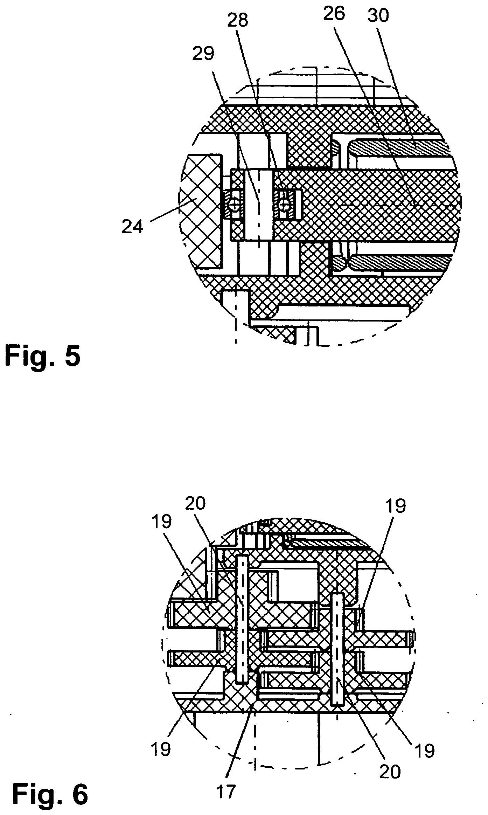

Fig. 1 bis 3 zeigen den Aufbau einer derzeit bevorzugten Ausführungsform einer Stellvorrichtung für ein Heizkörperventil in drei unterschiedlichen Schnittansichten. Einzelheiten dieser Stellvorrichtung sind in Fig. 4 bis 6 dargestellt.

Die Stellvorrichtung umfasst ein Gehäuse 10, das mit einem Gehäusedeckel 12 verschließbar ist und beispielsweise aus Polyamid (PA) gefertigt ist. In dem Gehäuse 10 ist ein Antriebsmotor 14, zum Beispiel ein Gleichstrommotor, mit einer Motorwelle 16 montiert.

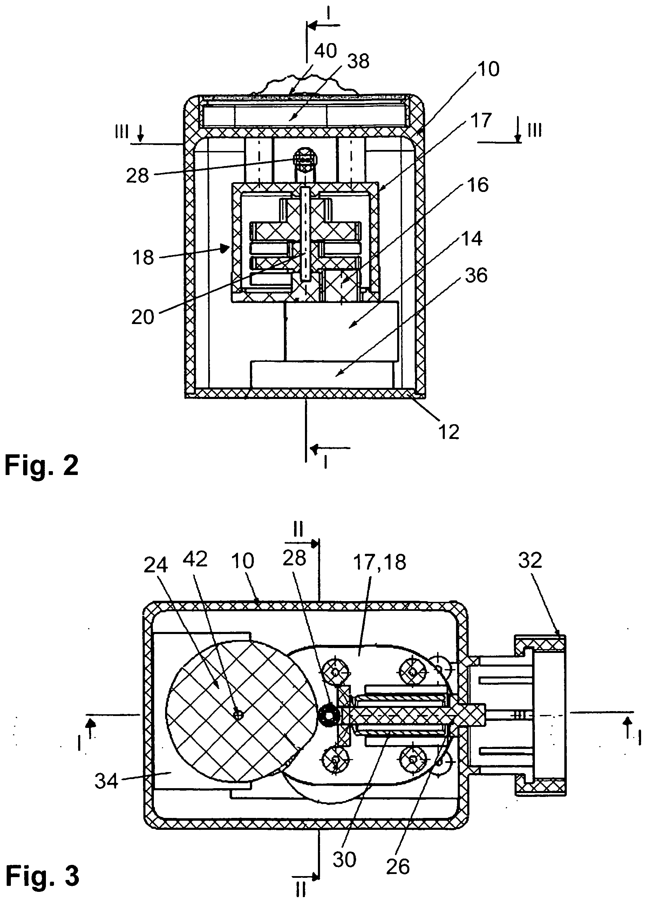

In Fig. 1 und 2 oberhalb des Antriebsmotors 14 ist ein Getriebegehäuse 17 mit einem Untersetzungsgetriebe 18 darin angebracht. Das Getriebegehäuse 17 ist ebenfalls beispielsweise aus PA gefertigt. Das Untersetzungsgetriebe 18 umfasst mehrere Zahnräder 19, die auf Achsstiften 20 drehbar gehalten sind und miteinander in Eingriff stehen. Das antriebsseitige Zahnrad 19 des Untersetzungsgetriebes 18 steht dabei mit der Motorwelle 16 in Eingriff. Die Zahnräder 19 sind beispielsweise aus Polyformaldehyd (POM) gefertigt und die Achsstifte 20 bestehen zum Beispiel aus Stahl.

Auf der Abtriebsseite des Untersetzungsgetriebes 18 ist ein Umsetzelement 21 vorgesehen, welches die Rotationsbewegung der Motorwelle 16 des Antriebsmotors 14 bzw. der Zahnräder 19 des Untersetzungsgetriebes 18 in eine Linearbewegung umsetzen soll. Zu diesem Zweck ist das Umsetzelement 21 im Wesentlichen scheibenförmig ausgebildet und ist in axialer Richtung aus zwei scheibenförmigen Abschnitten 22, 24 zusammengesetzt.

Der Antriebsabschnitt 22 des Umsetzelements 21 besitzt (zumindest teilweise) eine Außenverzahnung, die mit dem abtriebsseitigen Zahnrad 19 des Untersetzungsgetriebes 18 in Eingriff steht. Die drehfest (vorzugsweise einstückig) mit diesem Antriebsabschnitt 22 verbundene Kurvenscheibe 24 besitzt einen speziellen Außenumfang, der später anhand von Fig. 4 und 4A näher erläutert werden wird.

Anstelle des Antriebsabschnitts 22 kann die Kurvenscheibe 24 auch über eine andere Konstruktion antriebsseitig mit dem Untersetzungsgetriebe 18 gekoppelt werden.

Die Kurvenscheibe 24 des Umsetzelements 21 ist abtriebsseitig mit einem Stellglied 26 in Form eines Stößels gekoppelt, der aus dem Gehäuse 10 heraus ragt. Dieser Stößel 26 soll schließlich auf das Heizkörperventil (nicht dargestellt) wirken und so die gewünschte Heizleistung einstellen.

Zur möglichst reibfreien Kopplung zwischen der Kurvenscheibe 24 und dem Stellglied 26 ist eine Rolle 28 in Form eines Rillenkugellagers vorgesehen. Ein Rillenkugellager ist dafür ausgelegt, überwiegend radiale Kräfte aufzunehmen, weshalb es an dieser Stelle besonders vorteilhaft eingesetzt werden kann. Das Rillenkugellager 28 ist auf einer Welle 29 gelagert, die an dem der Kurvenscheibe 24 zugewandten Ende des Stellgliedes 26 befestigt ist. Dabei ist die Welle 29 für das Rillenkugellager 28 im Wesentlichen parallel zur Achse 42 der Kurvenscheibe 24 ausgerichtet.

Ferner ist das Stellglied 26 vorzugsweise in Richtung zum Heizkörperventil, d.h. entgegen dessen Ventilfeder, vorgespannt. Hierzu dient eine als Spiralfeder ausgeführte Feder (Kompensationsfeder) 30, die im Wesentlich koaxial zum Stellglied 26 angeordnet ist. Diese Feder 30 kompensiert einen Teil der von der Ventilfeder des Heizkörperventils verursachten Kraft. Das Stellglied 28 und die Feder 30 sind beispielsweise verdrehsicher am Getriebegehäuse 17 oder am Gehäuse 10 angebracht bzw. gelagert.

Die Kurvenscheibe 24 bzw. das Umsetzelement 21 und das Stellglied sind zum Beispiel aus POM gefertigt. Der Achsstift 42 für das Umsetzelement 21 besteht beispielsweise aus Stahl.

Zur Anbringung eines Heizkörperventils an dieser Stellvorrichtung ist an dem Gehäuse 10 beispielhaft eine Überwurfmutter 32 vorgesehen. Diese Überwurfmutter 32 und der angedeutete Steckadapter können problemlos an das jeweilige Heizkörperventil angepasst werden.

In dem Gehäuse 10 der Stellvorrichtung sind ferner eine Steuerelektronik 34 zum Ansteuern des Antriebsmotors 14 und ein Energiespeicher 36 in Form wenigstens einer Batterie oder eines Akkumulators zur Energieversorgung der Steuerelektronik 34 und des Antriebsmotors 14 vorgesehen.

Des Weiteren kann das Gehäuse 10 mit einer oder mehreren Solarzellen 38 ausgestattet sein, die hinter einer transparenten Scheibe 40 angeordnet sind. Mit Hilfe dieser Solarzellen 38 kann der wenigstens eine Akkumulator 36 aufgeladen werden, sodass auf einen regelmäßigen Austausch von Batterien verzichtet werden kann.

Es werden nun Bezug nehmend auf Fig. 4 und 4A die Konstruktion und die Wirkungsweise der Kurvenscheibe 24 näher erläutert.

Die Kurvenscheibe 24 ist auf einer im Wesentlichen zentralen Achse 42 drehbar gelagert, die an dem Getriebegehäuse 17 des Untersetzungsgetriebes 18 angebracht ist (vgl. Fig. 1). Sie ist in Draufsicht nicht rotationssymmetrisch bzw. kreisförmig, d.h. nicht über ihren gesamten Außenumfang mit einem konstanten Achsabstand R ausgebildet, sondern hat einen Außenumfang mit einem sich stufenweise verändernden Achsabstand R.

Insbesondere weist die Kurvenscheibe 24 an ihrem Außenumfang mehrere Stufenabschnitte 44a, 44b, ... 44k auf, die jeweils einen im Wesentlichen konstanten Achsabstand R besitzen. Die Achsabstände R der Stufenabschnitte 44a-k sind aber zueinander unterschiedlich, insbesondere wird der Achsabstand R von dem ersten Stufenabschnitt 4a hin zum letzten Stufenabschnitt 44k in den meisten Ausführungsformen stetig größer.

Die Stufenabschnitte 44a-k sind miteinander jeweils über Verbindungsabschnitte 46 verbunden, die jeweils einen veränderlichen, d.h. sich in Umfangsrichtung der Kurvenscheibe 24 verändernden Achsabstand R haben.

Die mittels der Stufenabschnitte 44a-k und Verbindungsabschnitte 46 erzeugte gestufte Außenkontur der Kurvenscheibe 24 bewirkt über die Rolle 28, die auf dem Außenumfang der Kurvenscheibe 24 abrollt, eine entsprechend stufenweise Linearbewegung des Stellgliedes 26.

In dem bevorzugten Ausführungsbeispiel haben die Stufenabschnitte 44a-k jeweils das gleiche Winkelmaß α und haben auch die Verbindungsabschnitte 46 jeweils das gleiche Winkelmaß β. Mit anderen Worten haben die Stufenabschnitte einen gleichen Winkelabstand zueinander. Außerdem ist der Unterschied der Achsabstände R jeweils zwischen zwei benachbarten Stufenabschnitten 44a-k im Wesentlichen konstant, d.h. es existiert eine im Wesentlichen gleichmäßige bzw. konstante Stufenhöhe. Auf diese Weise kann ein besonders gleichmäßiger Schaltvorgang zum Einstellen der Heizleistung über das Heizkörperventil erreicht werden. Je nach Anwendungsfall sind aber auch Kurvenscheiben 24 mit Stufenabschnitten 44a-k mit unterschiedlichen Winkelmaßen α, mit Verbindungsabschnitten 46 mit unterschiedlichen Winkelmaßen β und/oder mit unterschiedlichen Stufenhöhen denkbar.

Wie insbesondere in der nicht maßstabsgetreuen Darstellung von Fig. 4A zu erkennen, gehen die Verbindungsabschnitte 46 bevorzugt jeweils tangential in die beiden angrenzenden Stufenabschnitte 44 über. Hierdurch werden ruck- oder stoßartige Bewegungen der Rolle 28 und damit des Stellgliedes 26 beim Drehen der Kurvenscheibe 24 vermieden.

Des Weiteren ist in Fig. 4A erkennbar, dass der Achsabstand R eines Verbindungsabschnitts 46 in Richtung von dem angrenzenden Stufenabschnitt 44 mit kleinerem Achsabstand R zu dem angrenzenden Stufenabschnitt 44 mit größerem Achsabstand R (d.h. von links nach rechts in Fig. 4A bzw. im Uhrzeigersinn in Fig. 4) stetig zunimmt. Mit anderen Worten erreicht der Achsabstand R eines Verbindungsabschnitts 46 sein Maximum erst beim tangentialen Übergang in den angrenzenden Stufenabschnitt 44 mit dem größeren Achsabstand R.

Beim Drehen der Kurvenscheibe 24 im Uhrzeigersinn in Fig. 4 muss daher zum Überwinden eines Stufenabschnitts 46 jeweils ein Drehmoment überwunden werden. Dies bedeutet, dass die Kurvenscheibe 24 auf den Stufenabschnitten 44a-k eine Selbsthemmung aufweist, sodass sie in einer solchen Drehstellung, in welcher die Rolle 28 des Stellgliedes 26 an einem Stufenabschnitt 44a-k anliegt, ohne weitere Energiezufuhr (z.B. durch den Antriebsmotor 14) gehalten werden kann.

In einer modifizierten Ausführungsform der Kurvenscheibe 24 können die Verbindungsabschnitt 46 aber auch einen maximalen Achsabstand R besitzen, der etwas größer als der Achsabstand des angrenzenden Stufenabschnitts 44 mit größerem Achsabstand ist. In diesem Fall muss auch in der anderen Rotationsrichtung der Kurvenscheibe 24 (d.h. im Gegenuhrzeigersinn in Fig. 4) jeweils zum Überwinden des Verbindungsabschnitts 46 ein kleines Drehmoment überwunden werden. Da das Stellglied 26 in Richtung zum Heizkörperventil, d.h. weg von der Kurvenscheibe 24 vorgespannt ist, sollte dieses zu überwindende Drehmoment deutlich kleiner als jenes in der anderen Rotationsrichtung sein.

Die Verbindungsabschnitte 46 werden vorteilhafterweise als so genannte Splines konstruiert, d.h. in Umfangsrichtung der Kurvenscheibe 24 stückweise aus Polynomen n-ten Grades zusammengesetzt.

Des Weiteren zeigt Fig. 4 ein Ausführungsbeispiel einer Kurvenscheibe 24 mit insgesamt zehn Stufenabschnitten 44a-k. Selbstverständlich können - je nach Anwendungsfall und gewünschter Anzahl von Einstellmöglichkeiten - auch Kurvenscheiben 24 mit weniger als zehn, ggf. mit nur zwei oder drei Stufenabschnitten 44 oder mehr als zehn Stufenabschnitten 44 verwendet werden. Am häufigsten werden in der Praxis Kurvenscheiben 24 mit fünf bis zwölf Stufenabschnitten 44 zum Einsatz kommen.

Nachfolgend soll eine konkrete Dimensionierung einer Kurvenscheibe 24 für die erfindungsgemäße Stellvorrichtung beispielhaft erläutert werden (ohne dass die Erfindung auf die angegebenen Zahlenwerte beschränkt werden soll).

Die Kurvenscheibe 24 hat beispielsweise einen kleinsten Achsabstand R von etwa 15 mm. Im Fall von zehn Stufenabschnitten 44a-k erzeugen diese eine Stufenhöhe im Bereich von etwa 0,2 mm bis etwa 0,5 mm, bevorzugter im Bereich von etwa 0,25 mm bis etwa 0,4 mm, beispielsweise etwa 1/3 mm (d.h. Gesamtstellweg von etwa 3 mm bei zehn Stufen). Das Winkelmaß α der Stufenabschnitte 44a-k beträgt jeweils etwa 2,5 Grad bis 7 Grad, bevorzugter etwa 3 Grad bis etwa 5 Grad, beispielsweise etwa 4 Grad (4 · π/180 rad). Das Winkelmaß β der Verbindungsabschnitte 46 beträgt jeweils etwa 15 Grad bis 50 Grad, bevorzugter etwa 25 Grad bis etwa 40 Grad, beispielsweise etwa 30 Grad (30 · π/180 rad). Für einen üblichen Stellvorgang von zum Beispiel 2 mm ist in diesem Beispiel eine Drehung der Kurvenscheibe 24 von etwa 205 Grad notwendig.

Vergleicht man das erfindungsgemäße Konzept des Rotations-Linear-Umsetzungstriebes mit selbsthemmender Kurvenscheibe mit dem des selbsthemmenden Spindeltriebes, so hat die Kurvenscheibe insbesondere im Hinblick auf den Energieverbrauch deutliche Vorteile. Bei einem Stellvorgang kann der Energieverbrauch im Vergleich zu einer optimierten Gewindespindel um über 20% reduziert werden.

In Bezug auf den Antrieb kann zum Beispiel ein Gleichstrommotor 14 mit einer Drehzahl von etwa 2.000 U/min und einem maximalen Drehmoment von etwa 1,25 Nmm eingesetzt werden. Als Untersetzungsgetriebe 18 kommt beispielsweise ein fünfstufiges Getriebe mit einer Gesamtuntersetzung im Bereich von 300 in Betracht. Die Drehzahl der Kurvenscheibe 24 ergibt sich dann beispielsweise zu etwa 5 U/min.

### BEZUGSZIFFERNLISTE

- 10: Gehäuse
- 12: Gehäusedeckel
- 14: Antriebsmotor
- 16: Motorwelle
- 17: Getriebegehäuse
- 18: Untersetzungsgetriebe
- 19: Zahnräder
- 20: Achsstifte
- 21: Umsetzelement
- 22: Antriebsabschnitt
- 24: Kurvenscheibe
- 26: Stellglied / Stößel
- 28: Rolle / Rillenkugellager
- 29: Welle für 28
- 30: Feder
- 32: Überwurfmutter
- 34: Steuerelektronik
- 36: Energiespeicher / Akkumulator
- 38: Solarzelle
- 40: transparente Scheibe
- 42: Achse der Kurvenscheibe
- 44a-k: Stufenabschnitte der Kurvenscheibe
- 46: Verbindungsabschnitte der Kurvenscheibe

## Patentansprüche

1. Stellvorrichtung, insbesondere für ein Heizkörperventil, mit
einem Antriebsmotor (14) mit einer Motorwelle (16);
einem Stellglied (26); und
einem Rotations-Linear-Umsetzungstrieb (18-24), der antriebsseitig mit der Motorwelle (16) und abtriebsseitig mit dem Stellglied (26) gekoppelt ist und eine Rotationsbewegung der Motorwelle in eine Linearbewegung des Stellgliedes umsetzt,
**dadurch gekennzeichnet, dass**
der Rotations-Linear-Umsetzungstrieb (18-24) abtriebsseitig eine Kurvenscheibe (24) aufweist, die an ihrem Außenumfang mit mehreren Stufenabschnitten (44a-k) versehen ist, die jeweils einen im Wesentlichen konstanten Abstand (R) zur Achse (42) der Kurvenscheibe (24) aufweisen und über Verbindungsabschnitte (46) mit einem veränderlichen Achsabstand (R) verbunden sind, wobei die Abstände (R) der Stufenabschnitte (44a-k) zur Achse (42) der Kurvenscheibe (24) zueinander unterschiedlich sind.

2. Stellvorrichtung nach Anspruch 1,
**dadurch gekennzeichnet, dass**
die Verbindungsabschnitte (46) der Kurvenscheibe (24) jeweils im Wesentlichen tangential in einen angrenzenden Stufenabschnitt (44a-k) übergehen.

3. Stellvorrichtung nach einem der vorhergehenden Ansprüche,
**dadurch gekennzeichnet, dass**
die Unterschiede zwischen Achsabständen (R) benachbarter Stufenabschnitten (44a-k) der Kurvenscheibe (24) jeweils im Wesentlichen gleich sind.

4. Stellvorrichtung nach einem der vorhergehenden Ansprüche,
**dadurch gekennzeichnet, dass**
die Winkelmaße (α) der Stufenabschnitte (44a-k) der Kurvenscheibe (24) im Wesentlichen gleich sind.

5. Stellvorrichtung nach einem der vorhergehenden Ansprüche,
**dadurch gekennzeichnet, dass**
die Winkelmaße (β) der Verbindungsabschnitte (46) zwischen den Stufenabschnitten (44a-k) der Kurvenscheibe (24) im Wesentlichen gleich sind.

6. Stellvorrichtung nach einem der vorhergehenden Ansprüche,
**dadurch gekennzeichnet, dass**
das Stellglied (26) über eine Rolle (28) mit der Kurvenscheibe (24) gekoppelt ist, wobei die Achse der Rolle (28) im Wesentlichen parallel zur Achse (42) der Kurvenscheibe (24) verläuft und an dem Stellglied (26) befestigt ist.

7. Stellvorrichtung nach Anspruch 6,
**dadurch gekennzeichnet, dass**
die Rolle (28) zwischen der Kurvenscheibe (24) und dem Stellglied (26) als ein Rillenkugellager ausgebildet ist.

8. Stellvorrichtung nach einem der vorhergehenden Ansprüche,
**dadurch gekennzeichnet, dass**
das Stellglied (26) in Richtung weg von der Kurvenscheibe (24) vorgespannt ist.

9. Stellvorrichtung nach einem der vorhergehenden Ansprüche,
**dadurch gekennzeichnet, dass**
der Rotations-Linear-Umsetzungstrieb (18-24) ferner ein Untersetzungsgetriebe (18) aufweist, das antriebsseitig mit der Motorwelle (16) des Antriebsmotors (14) und abtriebsseitig mit der Kurvenscheibe (24) gekoppelt ist.

10. Stellvorrichtung nach einem der vorhergehenden Ansprüche,
**dadurch gekennzeichnet, dass**
die Stellvorrichtung wenigstens eine Solarzelle (38) zur Energieversorgung des Antriebsmotors (14), einer Steuerelektronik (34) und/oder eines wiederaufladbaren Energiespeichers (36) aufweist.

## Claims

1. Actuating device, in particular for a heating element valve, having a drive motor (14) with a motor shaft (16);
an actuator (26); and
a rotation-linear conversion drive (18-24), which is coupled on the drive side to the motor shaft (16) and on the output side to the actuator (26) and converts a rotational movement of the motor shaft into a linear movement of the actuator,
**characterized in that**
the rotation-linear conversion drive (18-24) has on the output side a cam disc (24) which is provided on its outer circumference with a plurality of step sections (44a-k) which each have an essentially constant distance (R) from the axis (42) of the cam disc (24) and are connected via connecting sections (46) with a variable axle spacing (R), wherein the spacings ® of the step sections (44a-K) from the axis (42) of the cam disk (24) are different from one another.

2. Actuating device according to Claim 1,
**characterized in that**
the connecting sections (46) of the cam disc (24) each merge essentially tangentially with an adjacent step section (44a-k).

3. Actuating device according to one of the preceding claims,
**characterized in that**
the differences between axle spacings (R) of adjacent step sections (44a-k) of the cam disc (24) are each essentially the same.

4. Actuating device according to one of the preceding claims,
**characterized in that**
the angular dimensions (α) of the step sections (44a-k) of the cam disc (24) are essentially the same.

5. Actuating device according to one of the preceding claims,
**characterized in that**
the angular dimensions (β) of the connecting sections (46) between the step sections (44a-k) of the cam disc (24) are essentially the same.

6. Actuating device according to one of the preceding claims,
**characterized in that**
the actuator (26) is coupled via a roller (28) to the cam disc (24), wherein the axis of the roller (28) extends essentially parallel to the axis (42) of the cam disc (24) and is attached to the actuator (26).

7. Actuating device according to Claim 6,
**characterized in that**
the roller (28) is embodied as a deep groove ball bearing between the cam disc (24) and the actuator (26) .

8. Actuating device according to one of the preceding claims,
**characterized in that**
the actuator (26) is prestressed in the direction away from the cam disc (24).

9. Actuating device according to one of the preceding claims,
**characterized in that**
the rotation-linear conversion drive (18-24) also has a step-down transmission (18) which is coupled on the drive side to the motor shaft (16) of the drive motor (14) and on the output side to the cam disc (24).

10. Actuating device according to one of the preceding claims,
**characterized in that**
the actuating device has at least one solar cell (38) for supplying energy to the drive motor (14), control electronics (34) and/or a rechargeable energy store (36) .

## Revendications

1. Dispositif de réglage, en particulier pour une soupape de radiateur, comprenant
un moteur d'entraînement (14) avec un arbre de moteur (16) ;
un actionneur (26) ; et
un mécanisme de conversion rotation-mouvement linéaire (18-24) qui est accouplé du côté de l'entraînement à l'arbre de moteur (16) et du côté de la prise de force à l'actionneur (26) et qui convertit un mouvement de rotation de l'arbre de moteur en un mouvement linéaire de l'actionneur,
**caractérisé en ce que**
le mécanisme de conversion rotation-mouvement linéaire (18-24) présente du côté de la prise de force un disque de came (24) qui est muni au niveau de sa périphérie extérieure de plusieurs portions étagées (44a-k) qui présentent à chaque fois une distance essentiellement constante (R) à l'axe (42) du disque de came (24) et qui sont connectées par le biais de portions de liaison (46) avec une distance axiale variable (R), les distances (R) des portions étagées (44a-k) à l'axe (42) du disque de came (24) étant différentes les unes des autres.

2. Dispositif de réglage selon la revendication 1,
**caractérisé en ce que**
les portions de liaison (46) du disque de came (24) se prolongent à chaque fois essentiellement tangentiellement par une portion étagée adjacente (44a-k) .

3. Dispositif de réglage selon l'une quelconque des revendications précédentes,
**caractérisé en ce que**
les différences entre les distances axiales (R) de portions étagées adjacentes (44a-k) du disque de came (24) sont à chaque fois essentiellement identiques.

4. Dispositif de réglage selon l'une quelconque des revendications précédentes,
**caractérisé en ce que**
les dimensions angulaires (α) des portions étagées (44a-k) du disque de came (24) sont essentiellement identiques.

5. Dispositif de réglage selon l'une quelconque des revendications précédentes,
**caractérisé en ce que**
les dimensions angulaires (β) des portions de liaison (46) entre les portions étagées (44a-k) du disque de came (24) sont essentiellement identiques.

6. Dispositif de réglage selon l'une quelconque des revendications précédentes,
**caractérisé en ce que**
l'actionneur (26) est accouplé au disque de came (24) par le biais d'un rouleau (28), l'axe du rouleau (28) s'étendant essentiellement parallèlement à l'axe (42) du disque de came (24) et étant fixé à l'actionneur (26).

7. Dispositif de réglage selon la revendication 6,
**caractérisé en ce que**
le rouleau (28) est réalisé entre le disque de came (24) et l'actionneur (26) sous forme de roulement à billes rainuré.

8. Dispositif de réglage selon l'une quelconque des revendications précédentes,
**caractérisé en ce que**
l'actionneur (26) est précontraint dans la direction l'éloignant du disque de came (24).

9. Dispositif de réglage selon l'une quelconque des revendications précédentes,
**caractérisé en ce que**
le mécanisme de conversion rotation-mouvement linéaire (18-24) présente en outre un réducteur (18) qui est accouplé du côté de l'entraînement à l'arbre de moteur (16) du moteur d'entraînement (14) et du côté de la prise de force au disque de came (24).

10. Dispositif de réglage selon l'une quelconque des revendications précédentes,
**caractérisé en ce que**
le dispositif de réglage présente au moins une pile solaire (38) pour l'alimentation électrique du moteur d'entraînement (14), d'une électronique de commande (34) et/ou d'un accumulateur d'énergie rechargeable (36).
